# EUROPÄISCHE PATENTANMELDUNG

(11) **EP 4 067 410 A1**
(43) Veröffentlichungstag der Anmeldung: **05.10.2022**
(21) Anmeldenummer: 22161779.8
(22) Anmeldetag: 14.03.2022
(51) Int. Cl.: C08G 73/02, C09D 175/00, D06N 3/00, D06N 3/14, B32B 27/12, B32B 27/40, C08J 9/30

(54) **VERWENDUNG VON POLYAMIN- UND/ODER POLYALKANOLAMIN-BASIERTEN CARBONSÄUREDERIVATEN IN WÄSSRIGEN POLYURETHANDISPERSIONEN**

(30) Priorität: 29.03.2021 EP 21165440
(71) Anmelder: Evonik Operations GmbH, 45128 Essen (DE)
(72) Erfinder: Klostermann, Michael, 45141 Essen (DE); von Hof, Jan Marian, 44789 Bochum (DE); Feldmann, Kai-Oliver, 45133 Essen (DE); Jansen, Marvin, 45131 Essen (DE)
(74) Vertreter: Evonik Patent Association

(57) **Zusammenfassung**

Die Verwendung von Polyamin- und/oder Polyalkanolamin-basierten Carbonsäurederivaten als Additive in wässrigen Polymer-Dispersionen zur Herstellung poröser Polymerbeschichtungen, bevorzugt zur Herstellung von porösen Polyurethanbeschichtungen wird beschrieben.

## Beschreibung

Die vorliegende Erfindung liegt auf dem Gebiet der Kunststoffbeschichtungen und Kunstleder.

Sie betrifft insbesondere die Herstellung poröser Polymerbeschichtungen, bevorzugt poröser Polyurethanbeschichtungen unter Verwendung von Polyamin- und/oder Polyalkanolamin-basierten Carbonsäurederivaten als Additive.

Mit Kunststoffen beschichtete Textilien, wie z.B. Kunstleder, bestehen in der Regel aus einem textilen Träger, aufweichen eine poröse Polymerschicht laminiert wird, welche wiederum mit einer Deckschicht bzw. einem Decklack überzogen ist.

Die poröse Polymerschicht weist hierbei vorzugsweise Poren im Mikrometer-Bereich auf, ist luftdurchlässig und damit atmungsaktiv, d.h. durchlässig für Wasserdampf, jedoch wasserbeständig. Bei der porösen Polymerschicht handelt es sich oftmals um poröses Polyurethan. Zur umweltfreundlichen Herstellung von PU-basiertem Kunstleder wurde vor geraumer Zeit ein Verfahren entwickelt, welches auf wässrigen Polyurethan-Dispersionen, sogenannten PUDs, basiert. Diese bestehen in der Regel aus in Wasser dispergierten Polyurethan-Mikropartikeln, der Festkörpergehalt liegt meist im Bereich von 30 - 60 Gew.-%. Zur Herstellung einer porösen Polyurethan-Schicht werden diese PUDs mechanisch aufgeschäumt, auf einen Träger beschichtet (Schichtdicken typischer Weise zwischen 300 - 2000 µm) und anschließend bei erhöhter Temperatur getrocknet. Während dieses Trocknungsschritts verdampft das im PUD-System enthaltene Wasser, wodurch es zu einer Verfilmung der Polyurethan-Partikel kommt. Um die mechanische Festigkeit des Films weiter zu erhöhen können dem PUD-System während des Herstellungsprozesses zusätzlich hydrophile (Poly)lsocyanate oder Carbodiimide zugesetzt werden, welche während des Trocknungsschritts mit freien, an der Oberfläche der Polyurethan-Partikel vorhandenen OH-Resten reagieren können und so zu einer zusätzlichen Vernetzung des Polyurethan-Films führen.

Sowohl die mechanischen als auch die haptischen Eigenschaften so hergestellter PUD-Beschichtungen werden maßgeblich von der Zellstruktur des porösen Polyurethanfilms bestimmt. Weiterhin hat die Zellstruktur des porösen Polyurethanfilms Einfluss auf die Luftdurchlässigkeit bzw. Atmungsaktivität des Materials. Besonders gute Eigenschaften lassen sich hierbei mit möglichst feinen, homogen verteilten Zellen erzielen. Zur Beeinflussung der Zellstruktur während des oben beschrieben Herstellverfahrens ist es üblich dem PUD-System vor bzw. während des mechanischen Aufschäumens Schaumstabilisatoren zuzusetzen. Entsprechende Stabilisatoren führen zum einen dazu, dass sich während des Aufschäumvorgangs ausreichende Mengen Luft ins PUD-System einschlagen lassen. Zum andern haben die Schaumstabilisatoren einen direkten Einfluss auf die Morphologie der erzeugten Luftblasen. Auch die Stabilität der Luftblasen wird maßgeblich durch die Art des Stabilisators beeinflusst. Dies ist insbesondere während derTrocknung geschäumter PUD-Beschichtungen wichtig, da sich hierdurch Trocknungsdefekte wie Zellvergröberung oder Trocknungsrisse unterbinden lassen.

Im Stand der Technik werden eine Reihe ionischer und nichtionischer Tenside offenbart, welche zur Herstellung von porösen, PUD-basierten Textil-Verbundmaterialien verwendet werden können. Insbesondere bevorzugt sind hierbei meist anionische Tenside auf Basis von Ammonium-Stearat, siehe z.B. US 2015/0284902 A1 oder US 2006 0079635 A1.

Der Einsatz entsprechender Ammonium-Stearat-basierter Stabilisatoren geht jedoch mit einer Reihe an Nachteilen einher. Ein wesentlicher Nachteil ist hierbei, dass Ammonium-Stearat im fertigen Kunstleder eine sehr hohe Migrierfähigkeit aufweist. Dies führt dazu, dass sich mit der Zeit Tensidmoleküle an der Oberfläche des Kunstleders anreichern, wodurch es zu weißen Verfärbungen an der Oberfläche des Leders kommen kann. Des Weiteren kann durch diese Tensidmigration ein als unangenehm empfundener Schmierfilm an der Oberfläche des Kunstleders entstehen, insbesondere dann, wenn entsprechende Materialien in Kontakt mit Wasser kommen.

Ein weiterer Nachteil von Ammonium-Stearat ist, dass es in Kontakt mit kalkhaltigem Wasser unlösliche Kalkseifen bildet. Bei Kontakt von auf Basis von Ammonium-Stearat hergestelltem Kunstleder mit kalkhaltigem Wasser können so weiße Aufblühungen an der Kunstleder-Oberfläche entstehen, was insbesondere bei dunkel eingefärbtem Leder unerwünscht ist.

Noch ein Nachteil von Ammonium-Stearat-basierten Schaumstabilisatoren ist, dass sie zwar ein effizientes Aufschäumen von wässrigen Polyurethan-Dispersionen erlauben, hierbei jedoch oftmals zu einer recht groben und irregulären Schaumstruktur führen. Dies kann sich negativ auf die optischen und haptischen Eigenschaften des fertigen Kunstleders auswirken.

Noch ein Nachteil von Ammonium-Stearat ist, dass die erzeugten PUD-Schäume oftmals eine unzureichende Stabilität aufweisen, was zu Nachteilen bei deren Verarbeitung, insbesondere bei der Trocknung der PUD-Schäume bei erhöhten Temperaturen, führen kann. Eine Folge hiervon wäre beispielsweise, dass entsprechende Schäume relativ schonend und langsam getrocknet werden müssen, was wiederum zu längeren Prozesszeiten bei der Kunstlederherstellung führt.

Ein weiterer Nachteil von Ammonium-Stearat ist, dass es in der Regel in Kombination mit anderen Tensiden eingesetzt werden muss, um überhaupt erst eine ausreichende Schaumstabilität erlangen zu können; im Stand der Technik werden hier z.B. Sulfosuccinamate beschrieben. Diese zusätzlichen Komponenten führen in der Anwendung zu einer erhöhten Komplexität.

Aufgabe der vorliegenden Erfindung war daher die Bereitstellung von Additiven zur Herstellung von PUD-basierten Schaumsystemen und Schaumbeschichtungen, welche ein effizientes Aufschäumen von PUD-Systemen ermöglichen ohne die im Stand der Technik aufgeführten Nachteile, die mit dem Einsatz von Ammonium-Stearat einhergehen, in Kauf nehmen zu müssen. Als Alternative zu Ammonium-Stearat-basierten Schaumstabilisatoren konnten in der Vergangenheit Polyolester sowie Polyolether als wirkungsvolle Schaumadditive für wässrige Polyurethan-Dispersionen identifiziert werden. Diese Strukturen sind beispielsweise in den Schriften EP3487945 A1 bzw. WO2019042696A1 beschrieben. Überraschender Weise wurde nun gefunden, dass die Verwendung von Polyamin- und/oder Polyalkanolamin-basierten Carbonsäurederivaten ebenfalls die Lösung der genannten Aufgabe ermöglicht.

Gegenstand der vorliegenden Erfindung ist daher die Verwendung von Polyamin- und/oder Polyalkanolamin-basierten Carbonsäurederivaten als Additive, vorzugsweise als Schaumadditive, in wässrigen Polymer-Dispersionen, vorzugsweise wässrigen Polyurethan-Dispersionen, bevorzugt zur Herstellung poröser Polymerbeschichtungen, insbesondere zur Herstellung von porösen Polyurethanbeschichtungen.

Die erfindungsgemäße Verwendung von Polyamin- und/oder Polyalkanolamin-basierten Carbonsäurederivaten hat hierbei überraschender Weise mannigfaltige Vorteile.

Ein Vorteil ist, dass Polyamin- und/oder Polyalkanolamin-basierte Carbonsäurederivate ein besonders effizientes Aufschäumen von wässrigen PUD-Systemen ermöglichen. Die so hergestellten Schäume zeichnen sich hierbei durch eine außergewöhnlich feine Porenstruktur mit besonders homogener Zellverteilung aus, was sich wiederum sehr vorteilhaft auf die mechanischen und haptischen Eigenschaften der porösen Polymerbeschichtung auswirkt, welche auf Basis dieser Schäume hergestellt werden. Des Weiteren kann hierdurch die Luftdurchlässigkeit bzw. Atmungsaktivität der Beschichtung verbessert werden.

Noch ein Vorteil ist, dass Polyamin- und/oder Polyalkanolamin-basierte Carbonsäurederivaten die Herstellung besonders stabiler Schäume ermöglichen. Dies wirkt sich zum einen vorteilhaft auf deren Verarbeitbarkeit aus. Zum andern hat die erhöhte Schaumstabilität den Vorteil, dass sich während der Trocknung entsprechender Schäume Trocknungsdefekte wie Zellvergröberung oder Trocknungsrisse vermeiden lassen. Darüber hinaus erlaubt die verbesserte Schaumstabilität ein schnelleres Trocknen der Schäume, was prozesstechnische Vorteile sowohl aus ökologischer als auch aus ökonomischer Sicht bietet.

Noch ein Vorteil ist, dass die erfindungsgemäßen Polyamin- und/oder Polyalkanolamin-basierten Carbonsäurederivate im fertigen Kunstleder nicht bzw. kaum migrierfähig sind und so nicht zu unerwünschten Oberflächenverfärbungen oder Aufblühungen führen. Des Weiteren sind die erfindungsgemäßen Tenside nicht bzw. kaum anfällig gegenüber kalkhaltigem Wasser.

Ein zusätzlicher Vorteil der erfindungsgemäßen Polyamin- und/oder Polyalkanolamin-basierten Carbonsäurederivate ist, dass sie zu einem Viskositätsaufbau der geschäumten, nicht-getrockneten Dispersion führen können. Dies wiederum kann sich vorteilhaft auf die Verarbeitbarkeit des Schaums auswirken. Des Weiteren kann hierdurch ggf. auf den Einsatz von zusätzlichen Verdickungsmitteln zur Einstellung der Schaumviskosität verzichtet, bzw. deren Einsatzkonzentration verringert werden, was ökonomische Vorteile mit sich bringt.

Ein weiterer Vorteil der erfindungsgemäßen Polyamin- und/oder Polyalkanolamin-basierten Carbonsäurederivate ist, dass sie auch ohne den Einsatz weiterer Tenside zu einer ausreichenden Stabilisierung von Schäumen basierend auf wässrigen Polymerdispersionen führen. Hierdurch kann die Komplexität bei der Zusammenstellung einer geeigneten Schaumformulierung anwenderseitig verringert werden.

Weiterhin ein Vorteil der erfindungsgemäßen Polyamin- und/oder Polyalkanolamin-basierten Carbonsäurederivate ist, dass sie sich über einen weiten pH-Bereich durch eine ausgezeichnete Hydrolysestabilität auszeichnen und so auch in Polymerdispersionen mit sehr niedrigen bzw. sehr hohen pH-Werten eingesetzt werden können. Die Erfindung wird nachfolgend weiter und beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Parameter angegeben, die durch Messung bestimmt wurden, so wurden die Messungen, wenn nicht anders angegeben, bei einer Temperatur von 25 °C und einem Druck von 101325 Pa durchgeführt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. In der vorliegenden Erfindung dargestellte Struktur und Summenformeln stehen stellvertretend für alle durch unterschiedliche Anordnung der sich wiederholenden Einheiten denkbaren Isomere.

Die Begriffe Polyamin- und/oder Polyalkanolamin-basierte Carbonsäurederivate umfassen im Sinne dieser Erfindung insbesondere Verbindungen, die durch Umsetzung mindestens eines Polyamins und/ oder eines Polyalkanolamins mit mindestens einem Acylgruppendonor, wie zum Beispiel einer Carbonsäure, einem Carbonsäureester, einem Carbonsäurehalogenid oder einem Carbonsäureanhydrid, wobei Carbonsäuren besonders bevorzugt sind, erhältlich sind. Für diese Umsetzungen können optional bei Bedarf geeignete Katalysatoren, wie z.B. organische oder anorganische Säuren wie beispielsweise p-Toluol-Sulfonsäure, Schwefelsäure oder Methansulfonsäure, saure Salze, Carbonsäurechloride, Metalle oder amphotere Metalloxide, Metallalcoholate oder -carboxylate wie beispielsweise Tetrabutyl(ortho)titanat oder Zinn(II)-2-ethylhexanoat verwendet werden. Weitere optionale Hilfsstoffe wie Aktivkohle oder Schleppmittel zur Wasserentfernung können ebenfalls eingesetzt werden. Entsprechende Umsetzungen sind dem Fachmann bekannt und sind beispielsweise in Römpp - Chemie Lexikon (Thieme-Verlag, 1996*)* beschrieben.

Der Begriff Polyamin umfasst im Sinne der gesamten vorliegenden Erfindung insbesondere gesättigte oder ungesättigte, offenkettige oder cyclische, lineare oder verzweigte organische Verbindungen mit mindestens zwei oder mehr endständigen Amingruppen, deren Ketten sekundäre oder tertitäre Amino-Gruppen aufweisen sein können.

Der Begriff Polyalkanolamin umfasst im Sinne der gesamten vorliegenden Erfindung insbesondere gesättigte oder ungesättigte, offenkettige oder cyclische, lineare oder verzweigte organische Verbindungen mit mindestens zwei oder mehr endständigen OH-Gruppen, deren Ketten mit sekundären oder tertitären Amino-Gruppen und / oder Ethergruppen unterbrochen sein können, wobei diese Verbindungen zugleich mindestens eine Amingruppe und mindestens zwei OH-Gruppen enthalten.

Die Begriffe Polyamin- und/oder Polyalkanolamin-basierte Carbonsäurederivate umfassen im Sinne der gesamten vorliegenden Erfindungen auch deren alkoxylierte Addukte, die durch Umsetzung eines Polyamin- und/oder Polyalkanolamin-basierten Carbonsäurederivate mit Alkylenoxiden wie z.B. Ethylen-, Propylen- und/oder Butylenoxid erhalten werden können.

Die Herstellung der erfindungsgemäßen Polyamin- und/oder Polyalkanolamin-basierten Carbonsäurederivate durch den Einsatz von Monocarbonsäuren und/oder polyfunktionelle Di- und/oder Tricarbonsäuren stellt eine besonders bevorzugte Auführungsform der vorliegenden Erfindung dar. Bevorzugte, zur Herstellung der erfindungsgemäßen Polyamin- und/oder Polyalkanolamin-basierten Carbonsäurederivate einsetzbare Carbonsäuren entsprechen der allgemeinen Form R-C(O)OH, wobei R ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist. Insbesondere bevorzugt sind hierbei Carbonsäuren ausgewählt aus Buttersäure (Butansäure), Capronsäure (Hexansäure), Caprylsäure (Octansäure), Pelargonsäure (Nonansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Octadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14-Eicosatetraensäure), Erucasäure ((Z)-13-Docosensäure), Nervonsäure ((Z)-15-Tetracosensäure), Rizinolsäure, Hydroxystearinsäure und/oder Undecylensäure sowie deren Mischungen, wie z.B. Rapsölsäure, Soyafettsäure, Sonnenblumenfettsäure, Erdnussfettsäure und/oder Tallölfettsäure. Ganz besonders bevorzugt sind Palmitinsäure und/oder Stearinsäure sowie insbesondere die Gemische dieser Substanzen. Erfindungsgemäße bevorzugt sind hierbei sowohl die reinen Fettsäuren, sowie deren technische Qualitäten, welche Kettenlängenverteilungen aufweisen bzw. Gemische aus Fettsäuren unterschiedlicher Kettenlänge enthalten. Erfindungsgemäß ebenfalls bevorzugt sind teilgehärtete Fettsäuren.

Quellen für geeignete Fettsäuren können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonnenblumen, Knochenöl, Klauenöl, Borretschöl, Lanolin, Emuöl, Hirschtalg, Murmeltieröl, Nerzöl, Borretschöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffeewachs, Reiswachs, Oleanderwachs, Bienenwachs oder Wollwachs.

Weiterhin kann es vorteilhaft sein, wenn zur Herstellung der erfindungsgemäßen Polyamin- und/oder Polyalkanolamin-basierten Carbonsäurederivate polyfunktionelle Di- und/oder Tricarbonsäuren eingesetzt werden. Bevorzugt sind hierbei aliphatische, lineare oder verzweigte Di- und/oder Tricarbonsäuren mit einer Kettenlänge von 2 bis 18 C-Atomen und/oder (technische) Dimerfettsäuren, die durch katalytische Dimerisierung ungesättigter Fettsäuren mit 12 bis 22 C-Atomen erhalten wurden. Beispiele entsprechender polyfunktioneller Säuren sind Oxalsäure, Malonsäure, Bernsteinsäure, Glutarsäure, Adipinsäure, Pimelinsäure, Korksäure, Suberinsäure, Azelainsäure, Sebacinsäure, Brassylsäure, Thapsiasäure, Tartronsäure, Weinsäure, Äpfelsäure, Itaconsäure und/oder Citronensäure. Insbesondere bevorzugt können polyfunktionelle Di- und/oder Tricarbonsäuren in Kombination mit monofunktionellen Carbonsäuren, wie oben beschrieben, eingesetzt werden, wodurch vernetzte Polyamin- und/oder Polyalkanolamin-basierten Carbonsäurederivate zugänglich sind.

Die zur Herstellung der erfindungsgemäßen Carbonsäurederivate verwendeten Polyamine sind vorzugsweise ausgewählt aus Diethylentriamin, Triethylentretaamin, Tetraethylenpentamin, Pentaethylenheptaamin, Dipropylentriamin, Tripropylentetraamin, Tetraethylenpentamin, Pentaethylenheptaamin, Spermin, Spermidin, sowie N-Alkylierte, N-Methylierte Derivate dieser Verbindungen, Polyethylenimin, Polypropylenimin, Polyiminoethylene und/oder Amin-Gruppen tragendende (Co)-Polymeren, insbesondere (Co)-Polymeren basierend auf Allylamin und / oder Vinylamin, sowie Mischungen dieser Substanzen, wobei Polyethlyenimine besonders bevorzugt sind.

Die zur Herstellung der erfindungsgemäßen Carbonsäurederivate verwendeten Polyalkoanolamine sind vorzugsweise ausgewählt aus Polydiethanolamin, Polydipropanolamin, Polydiisoproanolamin, Polytriethanolamin, Polytripropanolamin, Polytriisopropanolamin, Polyetheraminen, insbesondere auf Basis von Polyethylenoxid, Polypropylenoxid und Polyethylenoxid-Polypropylenoxid-Copolymeren und/oder OH- und Amingruppen tragendense (Co)-Polymeren, insbesondere Co-Polymeren basierend auf Allyalkohol, Vinylalkohol, Allylamin und Vinylamin, sowie Mischungen dieser Substanzen, wobei insbesondere Polytriisopropanolamin besonders bevorzugt ist.

Im Rahmen der vorliegenden Erfindung sind überdies solche Poylalkanolamine bevorzugt, welche zugänglich sind durch Kondensation von N-(Hydroxy-Alkyl)aminen, wobei insbesondere Trialkanolamine der allgemeinen Formel 1 bevorzugt sind 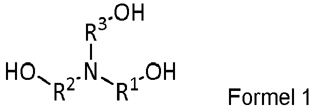 wobei die Reste R¹ bis R³ unabhängig voneinander für gleiche oder unterschiedliche 1,2-Alkylengruppen mit 2 bis 4 C-Atomen stehen. Darüber hinaus sind auch solche Polyalkanolamine bevorzugt, welche zugänglich sind durch Co-Kondensation von N-(Hydroxy-Alkyl)aminen, wobei insbesondere Trialkanolamine der allgemeinen Formel 1 bevorzugt sind, und anderen Hydroxlygruppen tragenden Molekülen, wie zum Beispiel Pentaerythritol, Sorbitol, Glycol, Glycerin oder Polyglycerin, wie zum Beispiel in der Schrift EP 0 057 398, beschrieben.

Darüber hinaus können auch alkoxylierte Addukte von Polyaminen und Polyalkanolaminen zur Herstellung der erfindungsgemäßen Carbonsäurederivate verwendet werden, die durch Umsetzung von Polyaminen und Polyalkanolaminen, insbesondere wie zuvor ausführlich beschrieben, mit Alkylenoxiden wie z.B. Ethylen-, Propylen- und/oder Butylenoxiderhalten erhalten werden können, wie beispielsweise in der Schrift US20100234631A1 beschrieben,

Werden zur Herstellung der erfindungsgemäßen Carbonsäurederivate Polyethylenimine eingesetzt, so sind diese bevorzugt zugänglich durch ringöffnende Polymerisation von Ethylenimin. Weiterhin sind insbesondere solche Polyethylenimine bevorzugt, welche ein mittleres Molgewicht von kleiner 25.000 g/mol, mehr bevorzugt von kleiner 12.500 g/mol noch mehr bevorzugt von kleiner 5000 g/mol, noch mehr bevorzugt von kleiner 2000 g/mol aufweisen. Das mittlere Molgewicht lässt sich hierbei bevorzugt durch Gel-Permeations-Chromatopgraphie (GPC) bestimmen. Hierfür kann beispielsweise das GPC-System SECcurity2 der Firma PCC, kalibriert gegen Polystyrol verwendet werden.

Werden zu Herstellung der erfindungsgemäßen Polyamin-basierten Carbonsäurederivate Amingruppen tragende (Co)-Polymere verwendet, so weisen diese bevorzugt mindestens eine Wiederholungseinheit A der allgemeinen Formel 2 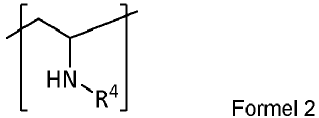 und / oder mindestens eine Wiederholungseinheit B der allgemeinen Formel 3 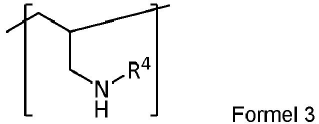 auf, wobei die Reste R⁴ gleiche oder verschiedene einwertige aliphatische oder aromatische, gesättigte oder ungesättigte Kohlenwasserstoffreste mit 1 bis 15 C-Atomen, bevorzugt 1 bis 10, besonders bevorzugt mit 1 bis 5 Kohlenstoffatomen oder H, besonders bevorzugt H sind.

Im Falle von Polyalkanolamin-basierten Carbonsäurederivaten, bei deren Herstellung OH- und Amin-Gruppen tragenden Co-Polymere verwendet werden, sind insbesondere solche Co-Polymere bevorzugt, welche neben den Wiederholungseinheiten A und / oder B noch mindestens eine Wiederholungseinheit C der Formel 4 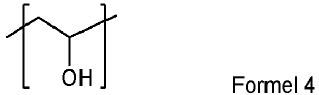 und / oder mindestens eine Wiederholungseinheit D der allgemeinen Formel 5 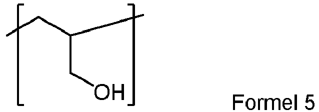 aufweisen.

Es ist ebenfalls bevorzugt, wenn in die zur Herstellung der erfindungsgemäßen Carbonsäurederivate verwendeten Polymere neben den Wiederholungseinheiten A bis D optional noch weitere monoethylenisch ungesättigte Co-Monomere oder Co-Monomergemische einpolymerisiert werden, um so zu weiter modifizierten Polymeren zu gelangen. Dies können nichtionische, kationische oder anionische Monomere sein. Bevorzugte nichtionische Co-Monomere sind hierbei ungesättigte Alkohole, wie Vinylalkohol oder Allylalkohol, sowie deren Alkoxylate, ungesättigte Nitrile, aliphatische oder aromatische Olefine, N-Vinyllactame, wie z.B. N-Vinylpyrrolidon oder N-Vinylcaprolactam, Vinylester von organischen Carbonsäure, Ester von monoethylenisch ungesättigten Carbonsäuren sowie Amide von monoethylenisch ungesättigten Carbonsäuren. Bevorzugte kationische Co-Monomere sind Vinylimidazol sowie Vinylimidazolin-Einheiten enthaltene Monomere, deren Alkylderviate sowie Quaterinisierungsprodukte, Vinylpyridine und deren Quaternisierungsprodukte, basische Ester von ethylensich ungesättigten Carbonsäuren mit Aminoalkoholen sowie basische Amide von ethylensich ungesättigten Carbonsäuren mit N,N-Dialkyl-Amino-Alkylaminen. Bevorzugte Anionische Co-Monomere a,β-ungesättigte Monocarbonsäuren, ungesättigte Dicarbonsäuren sowie Partialester von ungesättigten Dicarbonsäuren.

Weiterhin ist es im Rahmen der vorliegenden Erfindung bevorzugt, wenn zur Herstellung der erfindungsgemäßen Polyamin- und/oder Polyalkanolamin-basierten Carbonsäurederivate Amin- und/oder Amin- und OH-Gruppen tragende (Co)-Polymere eingesetzt werden, die ein mittleres Molgewicht von von kleiner 25.000 g/mol, mehr bevorzugt von kleiner 12.500 g/mol noch mehr bevorzugt von kleiner 5000 g/mol, noch mehr bevorzugt von kleiner 2000 g/mol aufweisen. Das mittlere Molgewicht lässt sich hierbei bevorzugt durch Gel-Permeations-Chromatopgraphie (GPC) bestimmen. Hierfür kann beispielsweise das GPC-System SECcurity2 der Firma PCC, kalibriert gegen Polystyrol verwendet werden.

Im Rahmen der vorliegenden Erfindung ist es bevorzugt, wenn Polyamin und/oder Polyalkanolamin und Carbonsäuren so umgesetzt werden, dass das molare Verhältnis von gegenüber Carbonsäuren reaktiven Amin- und OH-Funktionen zu Carbonsäuren im Bereich von 5:1 - 1,5:1, mehr bevorzugt im Bereich von 4:1 -1,7:1 noch mehr bevorzugt im Bereich 3,5:1 -1,9:1, noch mehr bevorzugt im Bereich 3:1 - 2:1 liegt.

Wie bereits beschrieben, sieht die vorliegende Erfindung die Verwendung von Polyamin- und/oder Polyalkanolamin-basierten Carbonsäurederivaten, wie zuvor beschrieben, als Additive in wässrigen Polymerdispersionen, bevorzugt in wässrigen Polyurethandispersionen vor. Die Polymer-Dispersionen sind hierbei bevorzugt ausgewählt aus der Gruppe wässriger Polystyrol-Dispersionen, Polybutadien-Dispersionen, Poly(meth)acrylat-Disperionen, Polyvinylester-Dispersionen und/oder Polyurethan-Dispersionen. Der Festkörper-Anteil dieser Dispersionen liegt bevorzugt im Bereich von 20 - 70 Gew. %, mehr bevorzugt im Bereich von 25 - 65 Gew.-%. Erfindungsgemäß besonders bevorzugt ist die Verwendung von Polyamin- und/oder Polyalkanolamin-basierten Carbonsäurederivaten als Additive in wässrigen Polyurethan-Dispersionen. Insbesondere bevorzugt sind hierbei Polyurethan-Dispersionen basierend auf Polyester-, Polyesteramid-, Polycarbonat-, Polyacetal- und/oder PolyetherPolyolen.

Im Rahmen der vorliegenden Erfindung ist es bevorzugt, wenn die Konzentration der Polyamin- und/oder Polyalkanolamin-basierten Carbonsäurederivate bezogen auf das Gesamtgewicht der wässrigen Polymerdispersion im Bereich von 0,1 - 20 Gew.-%, besonders bevorzugt im Bereich von 0,2 - 15 Gew.-%, insbesondere bevorzugt im Bereich von 0,5 - 10 Gew.-% liegt.

Bevorzugt werden die Polyamin- und/oder Polyalkanolamin-basierten Carbonsäurederivate in wässrigen Polymer-Dispersionen als Schaumhilfsmittel bzw. Schaumstabilisatoren zum Aufschäumen der Dispersionen verwendet, d.h. als Schaumadditive. Weiterhin können sie jedoch auch als Trocknungshilfsmittel, Verlaufsadditive, Netz-Mittel sowie Rheologieadditive verwendet werden, was ebenfalls bevorzugten Ausführungsformen der vorliegenden Erfindung entspricht.

Neben den erfindungsgemäßen Polyamin- und/oder Polyalkanolamin-basierten Carbonsäurederivaten können die wässrigen Polymerdispersionen noch weitere Zusätze/Formulierungskomponenten wie Farbstoffe- oder -Pigmente, Füllstoffe Mattierungsmittel, Stabilisatoren, wie Hydrolyse- oder UV-Stabilisatoren, Antioxidantien, Absorber, Vernetzer, Verlaufsadditive, Verdicker und/oder weitere Co-Tenside enthalten.

Die Polyamin- und/oder Polyalkanolamin-basierten Carbonsäurederivate können der wässrigen Dispersion sowohl pur als auch abgemischt in einem geeigneten Lösemittel zugeben werden. Bevorzugte Lösemittel sind in diesem Zusammenhang ausgewählt aus Wasser, Propylenglykol, Dipropylenglykol, Polypropylenglykol, Butyldiglykol, Butyltriglykol, Ethylenglykol, Diethylenglykol, Polyethylenglykol, Polyalkylenglykole auf Basis von Ethylen-, Propylen-, Butylen- und/oder Styroloxid (EO, PO, BO, SO), Alkoholalkoxylate auf Basis von EO, PO, BO und/oder SO sowie Mischungen dieser Substanzen, wobei wässrige Verdünnungen bzw. Abmischungen ganz besonders bevorzugt sind. In Abmischungen bzw. Verdünnungen Polyamin- und/oder Polyalkanolamin-basierten Carbonsäurederivaten sind vorzugsweise mindestens 5 Gew.-%, mehr bevorzugt mindestens 10 Gew.-%, noch mehr bevorzugt mindestens 15 Gew.-% der Polyamin- und/oder Polyalkanolamin-basierten Carbonsäurederivate enthalten.

Im Fall von wässrigen Verdünnungen bzw. Abmischungen der erfindungsgemäßen Polyamin- und/oder Polyalkanolamin-basierten Carbonsäurederivate kann es vorteilhaft sein, wenn der Abmischung hydrotrope Verbindungen zugesetzt werden. Hydrotrope Verbindungen sind hierbei wasserlösliche organische Verbindungen, welche aus einem hydrophilen und einem hydrophoben Part bestehen, jedoch zu niedermolekular sind, um tensidische Eigenschaften aufzuweisen. Der Begriff hydrotrope Verbindungen ist dem Fachmann bekannt. Als hydrotrope Verbindungen sind im Rahmen der vorliegenden Erfindung Alkali- und Ammonium-Toluolsulfonate, Alkali- und Ammonium-Xylolsulfonate, Alkali- und Ammonium-Naphtalinsulfonate, Alkali- und Ammonium-Cumolsulfonate sowie Phenol-Alkoxylate, insbesondere Phenol-Ethoxylate mit bis zu 6 Alkoxylat-Einheiten bevorzugt.

Weiterhin kann es vorteilhaft sein, dass die Polyamin- und/oder Polyalkanolamin-basierten Carbonsäurederivate nicht pur, sondern in Kombination mit weiteren Co-Tensiden als Additive in wässrigen Polymerdispersionen, bevorzugt in wässrigen Polyurethan-Dispersionen verwendet werden. Diese können z.B. für eine verbesserte Systemverträglichkeit oder, im Fall von vorformulierten Tensidmischungen für verbesserte Formulierungseigenschaften eingesetzt werden. Erfindungsgemäß bevorzugte Co-Tenside sind in diesem Zusammenhang z.B. freie Fettalkohole, Fettsäureamide, Ethylenoxid-Propylenoxid-Blockcopolymere, Betaine, wie z.B. Amido-Propyl-Betaine, Aminoxide, quaternäre Ammonium-Tensid, Amphoacetate Ammonium und/oder Alkali-Salze von Fettsäure, Alkylsulfate, Alkylethersulfate, Alkylsulfonate, Alkylbenzolsulfonate, Alkylphosphate, Alkyl-Sulfosuccinate, Alkyl-Sulfosuccinamate und/oder Alkylsarcosinate sowie Mischungen dieser Substanzen, wobei freie Fettalkohole, bevorzugt mit 12 bis 40, mehr bevorzugt mit 14 - 30, noch mehr bevorzugt mit 16 - 24 Kohlenstoffatomen, sowie Alkylsulfate mit 12 bis 40, mehr bevorzugt mit 14 - 30, noch mehr bevorzugt mit 16 - 24, sowie Mischungen dieser Substanzen ganz besonders bevorzugt sind. Weiterhin kann es sich bei dem Co-Tensid um silikonbasierte Tenside, wie z.B. Trisiloxan-Tenside oder Polyether-Siloxane handeln. Im Falle von Ammonium und/oder Alkali-Salzen von Fettsäure ist es bevorzugt, wenn diese weniger als 25 Gew.-% Stearat-Salze enthalten, insbesondere frei von Stearat-Salzen sind.

Im Falle von Kombinationen der erfindungsgemäßen Polyamin- und/oder Polyalkanolamin-basierten Carbonsäurederivate mit weiteren Co-Tensiden, wie zuvor beschrieben, ist es insbesondere bevorzugt, wenn diese Kombinationen zwischen 1 und 60 Gew.-%, bevorzugt zwischen 2 und 50 Gew.-%, mehr bevorzugt zwischen 3 und 40 Gew.-%, noch mehr bevorzugt zwischen 5 und 30 Gew.-% Co-Tensid, bezogen auf die Kombination aus erfindungsgemäßen Polyamin- und/oder Polyalkanolamin-basierten Carbonsäurederivaten und Co-Tensid, aufweisen.

Da, wie oben beschrieben, die erfindungsgemäße Verwendung von Polyamin- und/oder Polyalkanolamin-basierten Carbonsäurederivaten zu einer deutlichen Verbesserung von aus wässrigen Polymerdispersionen hergestellten, porösen Polymerbeschichtungen führt, sind wässrige Polymerdispersionen enthaltend mindestens eines der Polyamin- und/oder Polyalkanolamin-basierten Carbonsäurederivate, wie zuvor ausführlich beschrieben, ebenfalls Gegenstand der vorliegenden Erfindung.

Noch ein Gegenstand der vorliegenden Erfindung sind aus wässrigen Polymerdispersionen hergestellte poröse Polymerschichten, erhalten unter der erfindungsgemäßen Verwendung von Polyamin- und/oder Polyalkanolamin-basierten Carbonsäurederivaten, wie zuvor ausführlich beschrieben.

Bevorzugt lassen sich die erfindungsgemäßen porösen Polymerbeschichtungen durch ein Verfahren herstellen umfassend die Schritte
a) Bereitstellen einer Mischung enthaltend mindestens eine wässrige Polymerdispersion, mindestens ein erfindungsgemäßes Polyamin- und/oder Polyalkanolamin-basiertes Carbonsäurederivat, sowie ggf. weitere Additive
b) Aufschäumen der Mischung zu einem Schaum
c) optional Zugabe mindestens eines Verdickers zur Einstellung der Viskosität des Nassschaums
d) Auftragen einer Beschichtung der geschäumten Polymer-Dispersion auf einen geeigneten Träger
e) Trocknen / Aushärten der Beschichtung.

Die porösen Polymerbeschichtungen weisen Poren vorzugsweise im Mikrometerbereich auf, bevorzugt mit einer mittleren Zellgröße kleiner 350 µm, weiter bevorzugt kleiner 200 µm, insbesondere bevorzugt kleiner 150 µm, ganz besonders bevorzugt kleiner 100 µm. Die mittlere Zellgröße lässt sich vorzugsweise mikroskopisch, vorzugsweise durch Elektronenmikroskopie bestimmen. Hierfür wird ein Querschnitt der porösen Polymerbeschichtung mittels eines Mikroskops mit einer ausreichenden Vergrößerung betrachtet und die Größe von mindestens 25 Zellen ermittelt. Die mittlere Zellgröße ergibt sich dann als arithmetisches Mittel der betrachteten Zellen bzw. Zellgrößen.

Mit Blick auf bevorzugte Ausgestaltungen, insbesondere mit Blick auf die in dem Verfahren bevorzugt einsetzbaren Polyamin- und/oder Polyalkanolamin-basierten Carbonsäurederivate und Polymerdispersionen sei auf die vorangegangene Beschreibung und auch auf die zuvor genannten bevorzugten Ausführungsformen, insbesondere wie in den Ansprüchen dargestellt, verwiesen.

Es wird klargestellt, dass die Verfahrensschritte des erfindungsgemäßen Verfahrens wie oben dargestellt keiner festen zeitlichen Abfolge unterworfen sind. So kann beispielsweise der Verfahrensschritt c) bereits zeitgleich mit dem Verfahrensschritt a) ausgeführt werden.

Es entspricht einer bevorzugten Ausführungsform der vorliegenden Erfindung, wenn im Verfahrensschritt b) die wässrige Polymerdispersion durch das Aufbringen hoher Scherkräfte aufgeschäumt wird. Das Aufschäumen kann hierbei unter zu Hilfenahme von dem Fachmann geläufigen Scheraggregaten wie z.B. Dispermaten, Dissolvern, Hansa-Mixern oder Oakes-Mixern erfolgen.

Weiterhin ist er bevorzugt, wenn der am Ende des Verfahrensschritt c) hergestellte Nassschaum eine Viskosität von mindestens 5, bevorzugt von mindestens 10, mehr bevorzugt von mindestens 15 noch mehr bevorzugt von mindestens 20 Pa·s, jedoch von maximal 500 Pa s, bevorzugt von maximal 300 P as, mehr bevorzugt von maximal 200 Pa s noch mehr bevorzugt von maximal 100 Pa s aufweist. Die Viskosität des Schaums lässt sich hierbei vorzugsweise mit Hilfe eines Viskosimeters der Firma Brookfield, Modell LVTD ausgerüstet mit einer Spindel LV-4, bestimmen. Entsprechende Messmethoden zur Bestimmung der Nassschaumviskosität sind dem Fachmann bekannt.

Es entspricht einer bevorzugten Ausführungsform der vorliegenden Erfindung, wenn im Verfahrensschritt b) der Schaum möglichst homogen und feinzellig ist. Der Fachmann kann das gewünschtenfalls auf übliche Weise durch einfache direkte Sichtprüfung mit bloßem Auge oder mit optischen Hilfsmitteln, wie z.B. Lupen, Mikroskopen, anhand seiner üblichen Erfahrungswerte überprüfen. "Feinzellig" bezieht sich auf die Zellgröße. Je kleiner die mittlere Zellgröße, desto feinzelliger der Schaum. Gewünschtenfalls kann die Feinzelligkeit zum Beispiel mit einem Lichtmikroskop oder mit einem Rasterelektronenmikroskop bestimmt werden. "Homogen" meint die Zellgrößenverteilung. Ein homogener Schaum weißt eine möglichst enge Zellgrößenverteilung auf, so dass alle Zellen in etwa gleich groß sind. Quantifizieren könnte man dies wiederum mit einem Lichtmikroskop oder mit einem Rasterelektronenmikroskop.

Wie oben bereits beschrieben, können dem System zur Einstellung der Nassschaumviskosität zusätzliche Verdicker zugesetzt werden.

Bevorzugt sind die Verdicker, die im Rahmen der Erfindung vorteilhafterweise eingesetzt werden können, ausgewählt aus der Klasse der Assoziativ-Verdicker. Assoziativverdicker sind hierbei Substanzen, die durch Assoziation an den Oberflächen der in den Polymerdispersionen enthaltenen Partikeln zu einem verdickenden Effekt führen. Der Begriff ist dem Fachmann bekannt. Bevorzugte Assoziativverdicker sind hierbei ausgewählt aus Polyurethanverdickern, hydrophob-modifizierten Polyacrylat-Verdickern, hydrophob-modifizierten Polyether-Verdickern sowie hydrophob modifizierten Celluloseethern. Ganz besonders bevorzugt sind Polyurethanverdicker. Weiterhin ist es im Rahmen der vorliegenden Erfindung bevorzugt, wenn die Konzentration der Verdicker bezogen auf die Gesamtzusammensetzung der Dispersion im Bereich von 0,01 - 10 Gew.-%, mehr bevorzugt im Bereich von 0,05 - 5 Gew.-%, ganz besonders bevorzugt im Bereich von 0,1 - 3 Gew.-% liegt.

Im Rahmen der vorliegenden Erfindung ist es zudem bevorzugt, wenn in Verfahrensschritt d) Beschichtungen der geschäumten Polymerdispersion mit einer Schichtdicke von 10 - 10000 µm, bevorzugt von 50 - 5000 µm, mehr bevorzugt von 75 - 3000 µm noch mehr bevorzugt von 100 - 2500 µm hergestellt werden. Beschichtungen der geschäumten Polymerdispersion können durch dem Fachmann geläufige Methoden, wie z.B. Aufrakeln, hergestellt werden. Hierbei können sowohl direkte also auch indirekte Beschichtungsprozesse (sogenanntes Transfer-Coating) verwendet werden. Außerdem ist es ihm Rahmen der vorliegenden Erfindung bevorzugt, wenn in Verfahrensschritt e) die Trocknung der geschäumten und beschichteten Polymerdispersion bei erhöhten Temperaturen erfolgt. Erfindungsgemäß bevorzugt sind hierbei Trocknungstemperaturen von min. 50 °C, bevorzugt von 60 °C, mehr bevorzugt von mindestens 70 °C. Weiterhin ist es möglich die geschäumten und beschichteten Polymerdispersionen mehrstufig bei verschiedenen Temperaturen zu trocknen, um das Auftreten von Trocknungsdefekten zu vermeiden. Entsprechende Trocknungstechniken sind in der Industrie verbreitet und dem Fachmann bekannt.

Wie bereits beschrieben können die Verfahrensschritte c) - e) unter Zuhilfenahme von verbreiteten, dem Fachmann bekannten Methoden erfolgen. Eine Übersicht hierrüber ist beispielsweise in "Coated and laminated Textiles" (Walter Fung, CR-Press, 2002) gegeben.

Im Rahmen der vorliegenden Erfindung sind insbesondere solche porösen Polymerbeschichtungen enthaltend Polyamin- und/oder Polyalkanolamin-basierte Carbonsäurederivate bevorzugt, welche eine mittlere Zellgröße kleiner 350 µm, bevorzugt kleiner 200 µm, insbesondere bevorzugt kleiner 150 µm, ganz besonders bevorzugt kleiner 100 µm aufweisen. Die mittlere Zellgröße lässt sich vorzugsweise mikroskopisch, vorzugsweise durch Elektronenmikroskopie bestimmen. Hierfür wird ein Querschnitt der porösen Polymerbeschichtung mittels eines Mikroskops mit einer ausreichenden Vergrößerung betrachtet und die Größe von mindestens 25 Zellen ermittelt. Um eine ausreichende Statistik dieser Auswertemethode zu erhalten sollte die Vergrößerung des Mikroskops vorzugsweise so gewählt sein, dass sich mindestens 10×10 Zellen im Beobachtungsfeld befinden. Die mittlere Zellgröße ergibt sich dann als arithmetisches Mittel der betrachteten Zellen bzw. Zellgrößen. Diese Zellgrößenbestimmung mittels Mikroskopie ist dem Fachmann geläufig.

Die erfindungsgemäßen porösen Polymerschichten (bzw. Polymerbeschichtungen) enthaltend mindestens eines der erfindungsgemäßen Polyamin- und/oder Polyalkanolamin-basierten Carbonsäurederivate und ggf. weitere Additive können beispielsweise in der Textil-Industrie, z.B. für Kunstleder-Materialien, in der Bauindustrie, in der Elektronik-Industrie, in der Sportindustrie oder in der Automobil-Industrie verwendet werden. So können auf Basis der erfindungsgemäßen porösen Polymerbeschichtungen Gebrauchsgegenstände wie Schuhe, Einlegesohlen, Taschen, Koffer, Etuis, Kleidung, Automobilteile, bevorzugt Sitzbezüge, Bespannungen von Türteilen, Armaturenbrettteilen, Lenkrädern und/oder Griffen sowie Schaltsäcken, Einrichtungsgegenstände wie Schreibunterlagen, Kissen oder Sitzmöbeln, Gap Filler in elektronischen Geräten, Polster- und Dämpfungsmaterialien in medizinischen Anwendungen oder Klebebänder hergestellt werden. Diese Gebrauchsgegenstände sind ein weiterer Gegenstand dieser Erfindung.

### Beispiele:

### Substanzen:

lMPRANlL^{®} DLU: aliphatische Polycarbonatester-Polyether Polyurethandispersion von der Firma Covestro.

REGEL^{®} WX 151: wässrige Polyurethandispersion von der Firma Cromogenia. CROMELASTlC^{®} PC 287 PRG: wässrige Polyurethandispersion von der Firma Cromogenia. STOKAL^{®} STA: Ammonium-Stearat (ca. 30 %ig in H₂O) von der Firma Bozetto.

STOKAL^{®} SR: Talkfett-basiertes Natrium-Sulfosuccinamat (ca. 35 %ig in H₂O) von der Firma Bozetto.

ECO Pigment Black: Wässrige Pigment-Dispersion (schwarz) von der Firma Cromogenia. TEGOWET^{®} 250: Polyether-Siloxan-basiertes Verlaufsadditiv von der Firma Evonik. ORTEGOL^{®} PV 301: Polyurethan-basierter Assoziativ-Verdicker der Firma Evonik.

REGEL^{®} TH 27: Isocyanat-basiertes Vernetzungsadditiv von der Firma Cromogenia.

### Viskositätsmessungen:

Alle Viskositätsmessungen wurden mit einem Viskosimeter der Firma Brookfield, Typ LVTD ausgerüstet mit Spindel #64, bei einer konstanten Rotationsgeschwindigkeit von 12 rpm durchgeführt. Für die Viskositätsmessungen wurden die Proben in ein 100 ml Glas gefüllt, in welches die Messspindel in vorgeschriebener Tiefe eintauchte. Es wurde stets gewartet, bis das Viskosimeter einen konstanten Messwert anzeigte.

Methode zur Bestimmung der Säurezahl:
Geeignete Methoden zur Bestimmung der Säurezahl sind insbesondere solche gemäß DGF C-V 2,
DIN EN ISO 2114, Ph.Eur. 2.5.1, ISO 3682 und ASTM D 974.

Methode zur Bestimmung der Aminzahl:
Eine geeignete Einwaage wird in 50 mL Tetrahydrofuran gelöst und nach dem Lösen werden 50 mL Essigsäure (wasserfrei, 99 - 100%) zugegeben. Danach wird die Probe am Titrierautomaten gegen eine 0.1 M Lösung von Perchlorsäure in Dioxan titriert.

### Beispiel 1: Synthese eines Polyethylenimin-Palmitoylamids mit 6,90 Äq. Palmitinsäure

Ein Gemisch aus Palmitinsäure (108,5 g, 0,423 mol, 6,90 Äq., C16 ≥99%) und Polyethylenimin (49,05 g, 0,0613 mol, 800 g/mol, 1,00 Äq., Lupasol^{®} FG der Firma BASF) wurde unter Rühren und N₂-Durchfluss auf 170 °C erhitzt und dabei kontinuierlich das entstehende Wasser destillativ entfernt, bis eine Säurezahl von 3,2 mg KOH/g und eine Aminzahl von 226 mg KOH/g erreicht war.

### Beispiel 2: Synthese eines Polyethylenimin-Palmitoylamids mit 8,30 Äq. Palmitinsäure

Ein Gemisch aus Palmitinsäure (114,9 g, 0,448 mol, 8,30 Äq., C16 ≥99%) und Polyethylenimin (43,2 g, 0,0540 mol, 800 g/mol, 1,00 Äq., Lupasol^{®} FG der Firma BASF) wurde unter Rühren und N₂-Durchfluss auf 175 °C erhitzt und dabei kontinuierlich das entstehende Wasser destillativ entfernt, bis eine Säurezahl von 2,1 mg KOH/g und eine Aminzahl von 173 mg KOH/g erreicht war.

### Beispiel 3: Synthese eines Polyethylenimin-Palmitoylamids mit 10,3 Äq. Palmitinsäure

Ein Gemisch aus Palmitinsäure (121,9 g, 0,475 mol, 10,3 Äq., C16 ≥99%) und Polyethylenimin (36,7 g, 0,0459 mol, 800 g/mol, 1,00 Äq., Lupasol^{®} FG der Firma BASF) wurde unter Rühren und N₂-Durchfluss auf 175 °C erhitzt und dabei kontinuierlich das entstehende Wasser destillativ entfernt, bis eine Säurezahl von 14,2 mg KOH/g und eine Aminzahl von 158 mg KOH/g erreicht war.

### Beispiel 4: Abmischung der erfindunqsqemäßen Tenside

Die erfindungsgemäßen Tenside aus den Bespielen 1 - 3 wurden gemäß der in Tabelle 1 aufgeführten Zusammensetzungen abgemischt und anschließend bei 80 °C homogenisiert:

**Tabelle 1: Zusammensetzung von im Folgenden verwendeten Tensidabmischungen**

| | **Tensid 1** | **Tensid 2** | **Tensid 3** |
|---|---|---|---|
| Polyethylenimin-Palmitoylamid aus Beispiel 1 | 19,7 g | --- | --- |
| Polyethylen imin-Palmitoylamid aus Beispiel 2 | --- | 19,7 g | --- |
| Polyethylen imin-Palmitoylamid aus Beispiel 3 | --- | --- | 19,7 g |
| Cetearyl-Sulfat | 1,6 g | 1,6 | 1,6 |
| Wasser | 59,1 g | 59,1 g | 59,1 g |
| Propylenglykol | 6,25 g | 6,25 g | 6,25 g |

### Beispiel 5: Aufschäumversuche

Zur Ausprüfung der Wirksamkeit der erfindungsgemäßen Additiv-Kombination wurde eine Reihe an Verschäumungsexperimente durchgeführt. Hierfür wurde in einem ersten Schritt die Polyurethan-Dispersion IMPRANIL^{®} DLU von der Firma Covestro verwendet. Als Schaumstabilisator wurden die erfindungsgemäßen Tensidformulierungen 1 - 3 (siehe Tabelle 1) sowie eine Kombination aus den beiden Tensiden Stokal^{®} STA (Ammoniumstearat) und Stokal^{®} SR (Natrium-Sulfosuccinamat) als Vergleich verwendet. Tabelle 2 gibt einen Überblick über die Zusammensetzungen der jeweiligen Versuche.

Alle Verschäumungsexperimente wurden in Handversuchen durchgeführte. Hierfür wurden Polyurethandispersion und Tensid zunächst in einem 500 ml Plastikbecher vorgelegt und für 3 min. bei 1000 rpm mit einem Disslover, ausgerüstet mit einer Dispergierscheibe (Durchmesser = 6 cm), homogenisiert. Zum Aufschäumen der Mischungen wurde die Drehzahl anschließend auf 2000 rpm erhöht, wobei darauf geachtet wurde, dass die Dissolverscheibe stets soweit in die Dispersion eintauchte, dass sich eine ordentliche Trombe bildete. Bei dieser Geschwindigkeit wurden die Mischungen auf ein Volumen von ca. 425 ml geschäumt. Anschließend wurde die Mischung für weitere 15 Minuten bei 1000 rpm geschert. Die Dissolverscheibe wurde in diesem Schritt so tief in die Mischungen eingetaucht, dass keine weitere Luft ins System eingetragen wurde, jedoch das komplette Volumen noch in Bewegung war.

**Tabelle 2: Übersicht Schaumformulierungen**

| | **#1** | **#2** | **#3** | **#4** |
|---|---|---|---|---|
| IMPRANIL^{®} DLU | 150 g | 150 g | 150 g | 150 g |
| Tensid 1 | 5 g | - | - | - |
| Tensid 2 | - | 5 g | - | - |
| Tensid 3 | - | | 5 g | |
| Stokal^{®} STA | - | - | | 2 g |
| Stokal^{®} SR | - | - | | 2 g |
| Viskosität Nassschaum [mPa s] | 9200 | 7600 | 8200 | 4000 |

In allen Fällen wurden am Ende dieses Aufschäumvorgangs feine, homogene Schäume erhalten. Auffällig war, dass die Schäume, welche mit den erfindungsgemäßen Tensiden 1 - 3 hergestellt wurden, eine höhere Viskosität aufwiesen (siehe Tabelle 2). Die Schäume wurde mit Hilfe eines Filmziehgeräts (Typ AB3220 der Firma TQC) ausgerüstet mit einem Kastenrakel (Rakelstärke = 800 µm) auf eine silikonisierte Polyesterfolie gestrichen und anschließend für 5 min. bei 60 °C sowie für weitere 5 min bei 120 °C getrocknet.

Verglichen mit Probe #4 zeichneten sich die getrockneten erfindungsgemäßen Proben #1 - #3 durch eine homogenere makroskopische Erscheinung sowie durch einen samtigeren Griff aus. In elektronenmikroskopischen Untersuchungen konnte zu dem eine feinzelligere Porenstruktur festgestellt werden.

### Beispiel 6: Miqrationsversuche

Zur Bewertung der Oberflächenmigration der erfindungsgemäßen Tenside wurden Kunstledermaterialien nach folgendem Verfahren herstellt. Zunächst wurde eine Decklackbeschichtung auf eine silikonisierte Polyesterfolie aufgebracht (Schichtstärke 100 µm). Diese wurde anschließend bei 100 °C für 3 Minuten getrocknet. Anschließend wurde eine Schaumschicht auf die getrocknete Decklackschicht beschichtet (Schichtstärke 800 µm) und für 5 Minuten bei 60 °C und 5 Minuten bei 120 °C getrocknet. Auf den getrockneten Schaumschicht wurde in einem letzten Schritt eine wässrige Klebstoff-Schicht (Schichtstärke 100 µm) gestrichen und anschließend ein textiler Träger auf die noch feuchte Klebstoff-Schicht laminiert. Das fertige Laminat wurde erneut bei 5 Minuten bei 120 °C getrocknet und anschließend von der Polyesterfolie abgelöst.

Alle Beschichtungs- und Trocknungsvorgäng wurden hierbei mit einem *Labcoater LTE-S* von der Firma *Mathis AG*_durchgeführt. Decklack- und Klebstoff-Schicht wurden hierbei entsprechend der in Tabelle 3 aufgelisteten Zusammensetzungen formuliert, als Schaumschicht wurden die in Tabelle 2 aufgeführten Schaumformulierungen verwendet, welche nach dem in Beispiel 5 beschriebenen Verfahren aufgeschäumt wurden.

**Tabelle 3: Decklack- und Klebstoff-Formulierung zur Herstellung von Kunstledermaterialien**

| | **Decklack** | **Klebstoff** |
|---|---|---|
| CROMELASTIC^{®} PC 287 PRG | 100 g | - |
| REGEL^{®} WX 151 | - | 100 g |
| ECO Pigment Black | 10 g | 5 g |
| TEGOWET^{®} 250 | 0,2 g | 0,2 g |
| REGEL^{®} TH 27 | 6g | 6 g |
| ORTEGOL^{®} PV 301 | 7 g | 5 g |

Zur Bewertung der Tensidmigration wurden die Kunstlederproben nach ihrer Herstellung für 30 Minuten in 100 °C heißes Wasser platziert und anschließend über Nacht bei Raumtemperatur getrocknet. Nach dieser Behandlung wies die mit den Tensiden Stokal^{®} STA / SR hergestellte Vergleichsprobe (Schaumformulierung #4, Tabelle 2) deutlich sichtbare weiße Flecken an der Oberfläche des Kunstleders auf, während diese Oberflächenverfärbungen bei den mit den erfindungsgemäßen Tensiden hergestellten Proben (Schaumformulierung #1 - #3, Tabelle 2) nicht zu beobachten waren.

## Patentansprüche

1. Verwendung von Polyamin- und/oder Polyalkanolamin-basierten Carbonsäurederivaten als Additive, vorzugsweise als Schaumadditive, in wässrigen Polymer-Dispersionen, vorzugsweise wässrigen Polyurethan-Dispersionen.

2. Verwendung nach Anspruch 1, **dadurch gekennzeichnet, dass** die Polyamin- und/oder Polyalkanolamin-basierten Carbonsäurederivate erhältlich sind durch Umsetzung von Polyaminen und/oder Polyalkanolaminen mit mindestens einem Acylgruppendonor, wie vorzugsweise einer Carbonsäure, einem Carbonsäureester, einem Carbonsäurehalogenid oder einem Carbonsäureanhydrid, wobei Carbonsäuren besonders bevorzugt sind.

3. Verwendung nach Anspruch 2, **dadurch gekennzeichnet, dass** die Carbonsäure der allgemeinen Formel R-C(O)OH entspricht, wobei R ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist, und wobei bevorzugte Carbonsäuren ausgewählt sind aus Buttersäure (Butansäure), Capronsäure (Hexansäure), Caprylsäure (Octansäure), Pelargonsäure (Nonansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Octadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und/oder Undecylensäure, sowie deren Mischungen, wie z.B. Rapsölsäure, Soyafettsäure, Sonnenblumenfettsäure, Erdnussfettsäure und/oder Tallölfettsäure, wobei Palmitinsäure und Stearinsäure sowie Mischungen dieser beiden Substanzen ganz besonders bevorzugt sind, und/oder dass eine polyfunktionelle Di- und/oder Tricarbonsäure eingesetzt wird, bevorzugt aliphatische, lineare oder verzweigte Di- und/oder Tricarbonsäuren mit einer Kettenlänge von 2 bis 18 C-Atomen und/oder Dimerfettsäuren, die durch katalytische Dimerisierung ungesättigter Fettsäuren mit 12 bis 22 C-Atomen erhalten wurden, und/oder dass eine Mischung aus Carbonsäure der allgemeinen Formel R-C(O)OH, wie zuvor genannt, und polyfunktioneller Di- und/oder Tricarbonsäure eingesetzt wird.

4. Verwendung nach einem der Ansprüche 2 oder 3, **dadurch gekennzeichnet, dass** das Polyamin ausgewählt ist aus Diethylentriamin, Triethylentretaamine, Tetraethylenpentamine, Pentaethylenheptaamin, Dipropylentriamin, Tripropylentetraamin, Tetraethylenpentamin, Pentaethylenheptaamin, Spermin, Spermidin, sowie N-Alkylierte, N-Methylierte Derivate dieser Verbindungen, Polyethyleniminen, Polypropyleniminen und/oder Amin-Gruppen tragenden (Co)-Polymeren, insbesondere (Co)-Polymeren basierend auf Allylamin und / oder Vinylamin, sowie Mischungen dieser Substanzen, wobei Polyethlyenimine besonders bevorzugt sind.

5. Verwendung nach mindestens einem der Ansprüche 2 bis 4, **dadurch gekennzeichnet, dass** das Polyalkanolamin ausgewählt ist aus Polydiethanolamin, Polydipropanolamin, Polydiisoproanolamin, Polytriethanolamin, Polytripropanolamin, Polytriisopropanolamin, Polyetheraminen, insbesondere auf Basis von Polyethylenoxid, Polypropylenoxid und Polyethylenoxid-Polypropylenoxid-Copolymeren und/oder OH- und Amingruppen tragenden (Co)-Polymeren, insbesondere Co-Polymere basierend auf Allyalkohol, Vinylalkohol, Allylamin und/oder Vinylamin, sowie Mischungen dieser Substanzen, wobei insbesondere Polytrisopropanolamin besonders bevorzugt ist.

6. Verwendung nach mindestens einem der Ansprüche 1 bis 5 **dadurch gekennzeichnet, dass** es sich bei den Polyamin-basierten Carbonsäurederivaten um Umsetzungsprodukte von mindestens einem Polyethylenimin mit mindestens einer Carbonsäure handelt, wobei das Polyethylenimin ein mittleres Molgewicht von kleiner 25.000 g/mol, mehr bevorzugt von kleiner 12.500 g/mol noch mehr bevorzugt von kleiner 5000 g/mol, noch mehr bevorzugt von kleiner 2000 g/mol aufweist, wobei sich das mittlere Molgewicht bevorzugt durch Gel-Permeations-Chromatopgraphie (GPC) bestimmen lässt.

7. Verwendung nach mindestens einem der Ansprüche 2 bis 6 **dadurch gekennzeichnet, dass** das Poylalkanolamin erhältlich ist durch Kondensation von N-(Hydroxy-Alkyl)aminen, wobei insbesondere Trialkanolamine der allgemeinen Formel 1 bevorzugt sind, 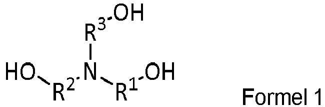 wobei die Reste R¹ bis R³ unabhängig voneinander für gleiche oder unterschiedliche 1,2-Alkylengruppen mit 2 bis 4 C-Atomen stehen, bevorzugt sindwobei auch Co-Kondensate von N-(Hydroxy-Alkyl)aminen, insbesondere von Trialkanolaminen der allgemeinen Formel 1, und anderen Hydroxlygruppen tragenden Molekülen, wie zum Beispiel Pentaerythritol, Sorbitol, Glycol, Glycerin oder Polyglycerin bevorzugt sind.

8. Verwendung nach mindestens einem der Ansprüche 1 bis 7 **dadurch gekennzeichnet, dass** es sich bei den Polyamin-basierten Carbonsäurederivaten um Umsetzungsprodukte von Amingruppen tragenden (Co)-Polymeren mit mindestens einer Carbonsäure handelt, wobei die Amingruppen tragenden (Co)-Polymere mindestens eine Wiederholungseinheit A der allgemeinen Formel 2 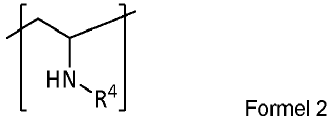 und / oder mindestens eine Wiederholungseinheit B der allgemeinen Formel 3 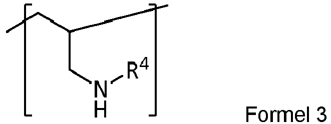 aufweisen, wobei die Reste R⁴ gleiche oder verschiedene einwertige aliphatische oder aromatische, gesättigte oder ungesättigte Kohlenwasserstoffreste mit 1 bis 10 C-Atomen, bevorzugt 1 bis 10, besonders bevorzugt mit 1 bis 5 Kohlenstoffatomen oder H, besonders bevorzugt H sind.

9. Verwendung nach mindestens einem der Ansprüche 1 bis 8 **dadurch gekennzeichnet, dass** es sich bei den Polyalkanolamin-basierten Carbonsäurederivaten um Umsetzungsprodukte von Amin- und OH-Gruppen tragenden (Co)-Polymeren mit mindestens einer Carbonsäure handelt, wobei die Amin- und OH-Gruppen tragenden (Co)-Polymere neben mindesten einer der Wiederholeinheiten A (gemäß Formel 2) und / oder B (gemäß Formel 3), noch mindesten eine Wiederholungseinheit C der Formel 4 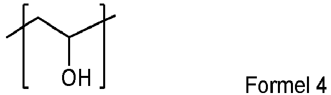 und / oder mindestens eine Wiederholungseinheit D der allgemeinen Formel 5 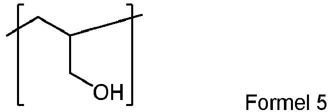 aufweisen.

10. Verwendung nach mindestens einem der Ansprüche 1 bis 9 **dadurch gekennzeichnet, dass** bei der Herstellung von Polyamin- und/oder Polyalkanolamin-basierten Carbonsäurederivaten Polyamin und/oder Polyalkanolamin und Carbonsäuren so umgesetzt werden, dass das molare Verhältnis von gegenüber Carbonsäuren reaktiven Amin- und OH-Funktionen zu Carbonsäuren im Bereich von 5:1 - 1,5:1, mehr bevorzugt im Bereich von 4:1 - 1,7:1 noch mehr bevorzugt im Bereich 3,5:1 - 1,9:1, noch mehr bevorzugt im Bereich 3:1 - 2:1 liegt.

11. Verwendung nach mindestens einem der Ansprüche 1 bis 10 **dadurch gekennzeichnet, dass** die Polyamin- und/oder Polyalkanolamin-basierten Carbonsäurederivate in Kombination mit mindesten einem weiteren Co-Tensid als Additiv in wässrigen Polymerdispersionen, bevorzugt wässrigen Polyurethandispersionen eingesetzt werden, wobei es sich bei dem Co-Tensid bevorzugt um Fettalkohole, Fettsäureamide, Ethylenoxid-Propylenoxid-Blockcopolymere, Betaine, wie z.B. Amido-Propyl-Betaine, Aminoxide, quaternäre Ammonium-Tensid, Amphoacetate Ammonium und/oder Alkali-Salze von Fettsäure, Alkylsulfate, Alkylethersulfate, Alkylsulfonate, Alkylbenzolsulfonate, Alkylphosphate, Alkyl-Sulfosuccinate, Alkyl-Sulfosuccinamate, Alkylsarcosinate und/oder auch silikon-basierte Co-Tenside sowie Mischungen dieser Substanzen handelt, wobei freie Fettalkohole, bevorzugt mit 12 bis 40, mehr bevorzugt mit 14 - 30, noch mehr bevorzugt mit 16 - 24 Kohlenstoffatomen, sowie Alkylsulfate mit 12 bis 40, mehr bevorzugt mit 14 - 30, noch mehr bevorzugt mit 16 - 24, sowie Mischungen dieser Substanzen ganz besonders bevorzugt sind.

12. Verwendung nach einem der Ansprüche 1 bis 11, **dadurch gekennzeichnet, dass** die wässrigen Polymer-Dispersionen ausgewählt sind aus der Gruppe wässriger Polystyrol-Dispersionen, Polybuatien-Dispersionen, Poly(meth)acrylat-Disperionen, Polyvinylester-Dispersionen und Polyurethan-Dispersionen, insbesondere wässrigen Polyurethan-Dispersionen, und wobei der Festkörper-Anteil dieser Dispersionen bevorzugt im Bereich von 20 - 70 Gew.-% liegt, mehr bevorzugt im Bereich von 25 - 65 Gew.-%, bezogen auf die gesamte Dispersion.

13. Verwendung nach mindestens einem der Ansprüche 1 bis 12, **dadurch gekennzeichnet, dass** die Konzentration der Polyamin- und/oder Polyalkanolamin-basierten Carbonsäurederivate bezogen auf das Gesamtgewicht der wässrigen Polymerdispersion im Bereich von 0,1 - 20 Gew.-%, besonders bevorzugt im Bereich von 0,2 - 15 Gew.-%, insbesondere bevorzugt im Bereich von 0,5 - 10 Gew.-% liegt.

14. Wässrige Polymerdispersion, vorzugsweise wässrige Polyurethan-Dispersion, enthaltend Polyamin- und/oder Polyalkanolamin-basierte Carbonsäurederivate, vorzugsweise wie in zumindest einem der Ansprüche 1 bis 13 beschrieben, wobei der Festkörper-Anteil dieser Dispersionen bevorzugt im Bereich von 20 - 70 Gew.-% liegt, mehr bevorzugt im Bereich von 25 - 65 Gew.-%, bezogen auf die gesamte Dispersion, und wobei die Konzentration der Polyamin- und/oder Polyalkanolamin-basierten Carbonsäurederivate bezogen auf das Gesamtgewicht der wässrigen Polymerdispersion im Bereich von 0,2 - 20 Gew.-%, besonders bevorzugt im Bereich von 0,4 - 15 Gew.-%, insbesondere bevorzugt im Bereich von 0,5 - 10 Gew.-% liegt.

15. Verfahren zur Herstellung einer porösen Polymerbeschichtung, vorzugsweise porösen Polyurethanbeschichtung unter Verwendung von Polyamin- und/oder Polyalkanolamin-basierten Carbonsäurederivaten als Additive in wässrigen Polymer-Dispersionen, vorzugsweise wässrigen Polyurethan-Dispersionen, vorzugsweise wie in den Ansprüchen 1 bis 14 beschrieben, umfassend die Schritte
a) Bereitstellen einer Mischung enthaltend mindestens eine wässrige Polymerdispersion, mindestens ein erfindungsgemäßes Polyamin-und/oder Polyalkanolamin-basiertes Carbonsäurederivat, sowie ggf. weitere Additive
b) Aufschäumen der Mischung zu einem Schaum
c) optional Zugabe mindestens eines Verdickers zur Einstellung der Viskosität des Nassschaums
d) Auftragen einer Beschichtung der geschäumten Polymer-Dispersion, vorzugsweise Polyurethan-Dispersion, auf einen geeigneten Träger,
e) Trocknen der Beschichtung.

16. Poröse Polymerbeschichtung, vorzugsweise poröse Polyurethanbeschichtung, erhältlich durch den Einsatz von Polyamin- und/oder Polyalkanolamin-basierten Carbonsäurederivaten als Additive in wässrigen Polymer-Dispersionen, vorzugsweise wässrigen Polyurethan-Dispersionen, bei der Herstellung solcher Polymerbeschichtungen, bevorzugt erhältlich durch ein Verfahren nach Anspruch 15.

17. Gebrauchsgegenstände enthaltend eine poröse Polymerbeschichtung nach Anspruch 16, wobei es sich dabei bevorzugt um Schuhe, Einlegesohlen, Taschen, Koffer, Etuis, Kleidung, Automobilteile, bevorzugt Sitzbezüge, Bespannungen von Türteilen, Armaturenbrettteilen, Lenkrädern und/oder Griffen sowie Schaltsäcken, Einrichtungsgegenstände wie Schreibunterlagen, Kissen oder Sitzmöbeln, Gap Filler in elektronischen Geräten, Polster- und Dämpfungsmaterialien in medizinischen Anwendungen oder Klebebänder handelt.
